# EUROPÄISCHE PATENTSCHRIFT

(11) **EP 2 096 850 B1**
(45) Veröffentlichungstag und Bekanntmachung des Hinweises auf die Patenterteilung: **13.04.2011**
(21) Anmeldenummer: 08157109.3
(22) Anmeldetag: 28.05.2008
(51) Int. Cl.: H04M 17/00, G06Q 40/00

(54) **Reload Manager für Wertkarten**
Reload manager for stored value cards
Structure d'accommodation de tableau de bord d'un véhicule

(30) Priorität: 27.02.2008 US 31797 P
(43) Veröffentlichungstag der Anmeldung: 02.09.2009
(73) Patentinhaber: Swiss Reinsurance Company, 8022 Zurich (CH)
(72) Erfinder: Weber, Matthias, Ridgefield, CT 06877 (US)
(74) Vertreter: Braun, André jr.

(56) Entgegenhaltungen:
- EP-A- 0 827 119
- EP-A- 1 209 886
- EP-A- 1 610 156
- WO-A-03/019926
- WO-A-2005/096190
- WO-A-2007/056880
- WO-A-2007/115884

## Beschreibung

Die vorliegende Erfindung betrifft ein Verfahren und System zum Auf- oder Nachladen von in Schaltvorrichtungen verwendeten dedizierten Speichereinheiten mit einem Guthaben für einen Geldbetragswert, wobei eine Reloadeinheit das Guthaben über ein Netzwerk auf die einer Identifikationsnummer eines Benutzers zugeordneten Speichereinheit überträgt. Mit einem Kommunikationsgerät wird eine Zentraleinheit angewählt mindestens ein Wertcode einer vorausbezahlten Wertkarte und die Identifikationsnummer der auf- oder nachzuladenden Speichereinheit übermittelt wird. Insbesondere betrifft die Erfindung ein Verfahren und ein System, bei welchem jede Wertkarte fest einem an vorbestimmten geographischen Ortsparametern befindlichen Objekt zugeordnet ist.

### Stand der Technik

Allgemein bekannt ist das Auf- oder Nachladen von im voraus bezahlten Guthaben auf Speichereinheiten, wie z.B. Chipkarten (wie z.B. Smart-Cards oder SIM-Cards) aber auch anderen Speichermodulen. In der veröffentlichten Patentanmeldung EP 827 119 A1 wird ein Verfahren zum Aufladen oder Nachladen einer Chipkarte mit einem Geldbetragswert beschrieben. Solche Wertkarten mit Wertcodes können im Stand der Technik an verschiedensten Endverkaufsstellen, wie z.B. Kiosken oder anderen Verkaufsstellen, gekauft werden. Wertcodes ohne Wertkarte oder Wertkarten mit Wertcodes können aber auch an Automated Teller Machines (ATM) wie Bankomaten oder Point of Sales (POS) Terminals, welche die Buchung über ein Bankkonto des Benutzers, Kreditkarten oder Prepaidkarten (z.B. Smart-Cards) durchführt, bezogen werden. Wertkarten haben verschiedene Vorteile, so etwa ihre unkomplizierte Handhabung, was eine vollständige Automatisierung des auf- bzw. Nachladens erlaubt. Ebenfalls bekannt sind im Stand der Technik Schaltvorrichtung und Signalgererierung zur selektiven Freigabe oder Aktivierung von Vorrichtungen oder anderen technischen Mitteln in unterschiedlichen Formen. Häufig ist das Feischalten jedoch an dynamische und kompleye Bedingungen und Kriterien gebunden, wie bei der differenzierten Signalerzeugung für spezifische Aktivierungen durch die Schaltvorrichtungen, die einer individuellen Anpasssung innerhalb des Systems unumgänglich machen. Besonders in der Automatisierung der Schaltvorrichtungen sind bei komplexen Systemen vielfach Grenzen gesetzt und menschliche Intervention ist immer noch notwendig. Für viele Arten von Schalt- und Aktivierungsvorrichtungen ist damit zur differenzierten Signalerzeugung und deren selektiven Übermittlung heute noch immer menschliche Interaktion in den meisten Bereichen der Industrie, Technik und Wissenschaft notwendige Voraussetzung, sobald die Komplexität der beteiligten Vorrichtungen, erfassten Messparametern oder zu kontrollierenden Prozessen und Interaktionen mit der Umwelt ein gewisses Mass überschritt. Insbesondere bei der Steuerung, Kontrolle und Überwachung dynamischer und/oder nicht-linearer Prozesse entzog sich eine Automatisierung dem Stand der Technik. Häufig ist es insbesondere die Nichtlinearität, welche konventionellen Vorrichtungen den Boden zur Automatisierung entzieht. Viele technische Umsetzungen unterschiedlichster Arten von Frühwarn-Vorrichtungen, Bild- und/oder Mustererkennungsvorrichtungen (Pattern-Recognition), insbesondere bei analogen Messdaten oder bei notwendiger Selbstorganisierung der Vorrichtung, sind in vielen Fällen im Stand der Technik noch heute nicht befriedigend gelöst sind. Die meisten natürlichen Prozesse besitzen mindestens teilweise einen nichtlinearen Ablauf und tendieren ausserhalb eines schmalen linearen Gleichgewichtbereichs zu exponentiell abweichendem Verhalten. Eine effiziente und zuverlässig funktionierende Frühwarnsignalerzeugung und automatisierte Signalerzeugung zur Behebung von Betriebsstörungen kann für viele dieser technischen Einrichtungen deshalb überlebenswichtig sein. Dies geht von komplexen technischen Vorrichtungen wie Flugzeugen, Robotern, Fabrikationsstrassen etc., mit jeweils vielen tausend Sensoren und Messsignalen, bis zu Überwachungs-, und Steuersystemen basierend auf unkontrollierbaren Umwelteinriflüssen, wie meteorlogischen (Stürme, Hurrikans, Überschwemmungen), geologischen (Erdbeben), wirtschaftbedingten (Börse) Einflüssen. Der Stand der Technik löst diese Aufgabe, falls überhaupt, nur mangelhaft, unter Aufwendung grosser menschlicher Arbeitsleistung und ohne je die notwendige Automatisierung erreicht zu haben.

Im Stand der Technik findet sich weiter die internationale Patentanmeldung WO 03/019926. WO 03/019926 zeigt ein Verfahren zum Nachladen von Chipkarten mit einem Geldbetragswert. Der Benutzer überträgt dazu von einer Prepaid-Karte einen entsprechenden Code zusammen mit einer Identifikationsnummer der Chipkarte in seinem Mobilfunkgerät. Eine Zentraleinheit lädt dann einen dem Code zugeordneten Geldbetragswert auf die Chipkarte des Benutzer. WO 03/019926 zeigt weiter eine technische Lösung, wie Chipkarten auch von netzfremden Zentraleinheiten aufgeladen werden können. WO 2007/115884 zeigt ein System, mittels welchem zwei unabhängige Vorrichtungen zum Eingreifen bei Betriebsstörungen technischer Anlagen basierend auf gemessenen und übertragenen Messparametern gegenseitig aktiviert werden können. WO 2005/096190 zeigt ein Frühwarnsystem für Wirbelstürme. Dabei werden mittels zellulär angeordneten Messstationen physikalische Messparameter gemessen, an eine Zentraleinheit übermittelt und dort dynamisch auf weitere Zellen extrapoliert. WO 2007/115884 zeigt weiter ein System, mittels welchem Messparameter von Messstationen erfasst werden und in Gebiete extrapoliert werden können, in welchen sich keine Messstationen zum Erfassen und Übertragen von entsprechenden Messparametern befinden. EP 1209886 zeigt ein Überwachungs- und Alarmsystem, mittels welchem Benutzer von mobilen Endgeräten in zellulären Kommunikationsnetzstrukturen beim Auftreten von bedrohlichen Ereignissen In einem bestimmten geographischen Ort gewarnt werden können. EP 1610156 zeigt eine Lösung um bei Wetterphänomen wie Regen oder Hochwasser innerhalb eines bestimmten geographischen Gebietes das Erstellen von Karten für die mit dem Wetterphänomen verbundenen meteorologischen Gefahren zu ermöglichen. Mittels einer Punkt-zu-Punkt-Analyse basierend auf der Informationen einer statistischen Datenbank lassen sich Gefahrenklassen abgrenzen und eine Schweregrad-Skala anhand der Auftrittshäufigkeiten für das Wetterphänomen festlegen.

### Technische Aufgabe

Es ist eine Aufgabe dieser Erfindung, ein neues Verfahren und System zum Auf- oder Nachladen von in Schaltvorrichtungen verwendeten dedizierten Speichereinheiten mit einem Guthaben für einen Geldbetragswert vorzuschlagen, wobei die Schaltvorrichtung aktivierbar ist, falls die auf- oder nachzuladenden Speichereinheit entsprechende Werte umfasst. Insbesondere sollen geographisch fixe Objekt mittels des erfindungsgemässen Systems erfasst werden. Das System und Verfahren soll eine vollständige Automatisierung erlauben und unkompliziert und einfach sowohl für den Benutzer als auch für den Dienstanbieter handhabbar sein. Ebenfalls sollen Ereignisse zur Signalerzeugung dynamisch basierend auf Messdaten topographisch erfasst und die automatische Aktivierung der Vorrichtung mittels entsprechender Signalerzeugung erlauben.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zum Auf- oder Nachladen von in Schaltvorrichtungen verwendeten dedizierten Speichereinheiten mit einem Guthaben für einen Geldbetragswert eine Reloadeinheit das Guthaben über ein Netzwerk auf die einer Identifikationsnummer eines Benutzers zugeordneten Speichereinheit überträgt, wobei mit einem Kommunikationsgerät eine Zentraleinheit angewählt wird und mittels dem Kommunikationsgerät mindestens ein Wertcode einer vorausbezahlten Wertkarte und die Identifikationsnummer der auf- oder nachzuladenden Speichereinheit übermittelt wird, dass zelluläre Messvorrichtungen Messparameter in einer Vielzahl von topographischen Zellen erfassen und an die Zentraleinheit übertragen, falls vordefinierte Schwellwerte der Messparameter in einer topographischen Zelle überschritten werden, wobei die Zentraleinheit basierend auf den übertragenen Messparameter Wertzonen generiert und jede Zelle eindeutig einer Wertzone zuordnet, dass die Zentraleinheit für den übermittelten Wertcode mittels einer Datenbank geographische Ortsparameter, Werteinheiten und Identifikationsnummer bestimmt, und mittels der geographischen Ortsparametern dem Wertcode eine Wertzone zuordnet, dass die Zentraleinheit zugeordnete Wertzone, Werteinheiten und Identifikationsnummer über einen ersten Kommunikationskanal an die Reloadeinheit zum Auf- oder Nachladen der Speichereinheit übermittelt, und dass die Reloadeinheit eine Geldbetragswert entsprechend der Wertzone und den Werteinheiten der Speichereinheit über einen zweiten Kommunikationskanal mittels der Identifikationsnummer gutschreibt wobei die Schaltvorrichtung basierend auf dem nachgeladenen Geldbetragswert der Speichereinheit aktiviert wird. Als Identifikation der Speichereinheit bzw. des Benutzers kann irgendeine eindeutig zuordenbare Identifikation insbesondere z.B. eine der Speichereinheit zugeordnete MSISDN (Mobile Subscriber ISDN), d.h. die Rufnummer, und/oder eine IMSI (International Mobile Subscriber Identification) verwendet werden. Bei den Speichereinheiten kann es sich um alle möglichen Arten von Speichermodulen handeln insbesondere z.B. um Chipkarten, wie z.B. um SIM-Karten (Subscriber Identification Module) oder Smart-Cards handeln. In einer Ausführungsvariante kann als Kommunikationsgerät die Schaltvorrichtung benutzt werden, in welche die auf- oder nachzuladende Speichereinheit eingeführt oder integriert ist. Die geographischen Ortsparameter können z.B. mindestens Längen- und Breitengraddaten umfassen. Die Speichereinheit kann z.B. wiederentfernbar über eine kontaktbehaftete Schnittstelle mit der Schaltvorrichtung verbunden sein. Die Speichereinheit kann z.B. auch als fixer Bestandteil in die Schaltvorrichtung integriert sein. Ein Vorteil der Erfindung ist u.a., dass zur gegenseitigen Anerkennung von Wertkarten mit Wertcodes keine speziellen vertraglichen Vereinbarungen zwischen den einzelnen Benutzer und Betreiber notwendig sind. Im Gegenteil reicht für eine Betreiber oder Dienstanbieter eine einzige vertragliche Vereinbarung mit einer erfindungsgemässen Zentraleinheit bzw. dem Operator oder Betreiber davon. Die Zentraleinheit selbst braucht keine speziellen Vereinbarungen mit den diversen Benutzern, sondern es reicht, bei jedem in Frage kommenden eine eindeutige Identifikation und als Ausführungsvariante den Nachweis eines effektiven physikalischen Objektes des Benutzers am Ort der Ortsparameter zu haben. Dies kann über die üblichen Dienstleister- oder gar Abonnentenverträge geregelt werden. Die Automatisierung des Systems profitiert davon auf verschiedensten Ebenen, da jede menschliche Interaktion zum Betrieb des Systems unnötig wird. Ein anderer Vorteil ist, dass der Dienstanbieter sich nicht darum zu kümmern braucht, wo und von welcher Art der Benutzer ist. Die Wertkarten mit entsprechendem Wertcode zum Auf- oder Nachladen der Speichereinheit kann überall gekauft werden ohne persönliche Beurteilung des Benutzers. Ebenso braucht es den Benutzer nicht zu kümmern, welcher Reloadeinheit der Wertcode zugeordnet ist. Er muss für die Wertcodes beliebiger Dienstanbieter stets nur Identifikation und lokalisierbare Ortsparameter aufweisen um seine Speichereinheit auf- oder nachzuladen. Es gibt keine benutzerspezifischen versteckten oder offensichtlichen Eigenheiten zu beachten. Auch kann der Benutzer vollständig unabhängig vom Objekt in einer Zelle so viele Wertkarten erstehen, wie er möchte, ohne dass er durch das Objekt oder den Wert des Objektes im Guthaben limitiert würde.

In einer Ausführungsvariante wird basierend auf den Messparametern und einem aus den topographischen Zellen mit Messvorrichtungen bestehenden topographisches Grid die Wertzone generiert, wobei die physikalischen Eigenschaften des Ereignisses die Struktur der Wertzone innerhalb des Grids ergeben. Die Messparameter können dynamisch an die Messvorrichtungen übermittelt werden, wobei die Wertzone innerhalb des Grids dynamisch angepasst wird. Anstelle einer Wertzone können z.B. auch mehrere Wertzonen mit unterschiedlichen Auswirkungen generiert werden. Diese Ausführungsvariante hat unter anderem den Vorteil, dass das System dynamisch an die Ereignisse koppelt und sich ohne irgendwelche Interaktion selbst anpasst und entsprechend automatisiert agiert.

In einer Ausführungsvariante generiert die Schaltvorrichtung basierend auf der Aktivierung und der Identifikationsnummer Alarm- und/oder Notfallsignale und überträgt sie auf selektierte Vorrichtungen. Diese Ausführungsvariante hat unter anderem den Vorteil, dass das System zur vollautomatisierten und/oder benutzerspezifischen Behebung von Betriebsstörungen z.B. beim mittels Ortsparameter lokalisierbaren Objekt dienen kann. Dies war im Stand der Technik so bis anhin nicht möglich.

In einer anderen Ausführungsvariante sind die Zellen der Messvorrichtungen in Bezug auf alle möglichen geographischen Ortsparameter der Wertcodes flächendeckend angeordnet. Diese Ausführungsvariante hat unter anderem den Vorteil, dass der Dienstanbieter das System unabhängig der angegebenen Ortsparameter anbieten kann. Eine Überprüfung des Benutzers auch in dieser Hinsicht erübrigt sich damit. Zudem hat die Erfindung den Vorteil, dass die Bewegung geographisch oder topographisch nicht statischer Ereignisse mittels der Messparameter erfasst und entsprechend für die Wertkarten korreliert werden können.

In einer weiteren Ausführungsvariante bestimmt die Zentraleinheit die Wertzonen nur für Zellen, in welchen die Schwellwerte überschritten sind. Diese Ausführungsvariante hat u.a. den Vorteil, dass die Effizienz des Systems gesteigert wird, was besonderes bei grossflächig deckenden Systemen z.B. in Bezug auf die Reaktionsgeschwindigkeit des Systems wichtig sein kann.

In einer Ausführungsvariante filtert die Zentraleinheit die übermittelten Messparameter auf korrelierte Ereignisse in unterschiedlichen Zellen, wobei ein entsprechendes Filtermodul mindestens zeitliche und/oder topographische Korrelationsparameter umfasst. Die Erfindung hat wie oben u.a. den Vorteil, dass die Bewegung geographisch oder topographisch nicht statischer Ereignisse mittels der Messparameter erfasst und entsprechend für die Wertkarten korreliert werden können.

In einer wieder anderen Ausführungsvariante schreibt die Zentraleinheit den Geldbetragswert auf einem Transferkonto der Reloadeinheit gut. Die Zentraleinheit kann z.B. die Reloadeinheit des Benutzers basierend auf dem Wertcode mittels der Datenbank bestimmen. Als Ausführungsvariante kann z.B. die Zentraleinheit die Reloadeinheit auch basierend auf einer vom Benutzer der Speichereinheit eingegebenen Identifikationsnummer mittels der Datenbank bestimmt. Die Identifikationsnummer kann z.B. die Identifikationsnummer der Speichereinheit oder eine reloadeinheitsspezifische Identifikationsnummer sein. Diese Ausführungsvariante hat u.a. den Vorteil, dass die Zentraleinheit als vollständig unabhängige Netzwerkeinheit realisiert werden kann. Auch dies war bis anhin so im Stand der Technik nicht möglich.

In einer weiteren Ausführungsvariante wird pro Wertkarte und Wertcode nur eine Werteinheit zugeordnet wird. Diese Ausführungsvariante hat u.a. den Vorteil, dass die Wertkarten z.B. in einer Art Coupon-System vom Benutzer frei gekauft werden können. Anhand der Anzahl Wertkarten kann er im Spezialfall Behebung von Betriebsstörungen durch Signalgenerierung der Schaltvorrichtung das nachgeladenen Guthaben oder die Deckung selbst seinen Bedürfnissen wie objektive Kriterien z.B. Grösse oder Wert des Objektes oder subjektive Kriterien z.B. persönliches Sicherheitsbedürfnis oder vorhandene Eigenmittel anpassen.

In einer weiteren Ausführungsvariante ist jeder Wertkarte einem an den geographischen Ortsparametern befindlichen Objekt zugeordnet. Diese Ausführungsvariante hat u.a. den Vorteil, dass der Dienstanbieter des Systems eine gewisse Sicherheit in Bezug auf den Benutzer erhält. Ebenfalls kann damit z.B. länderspezifische Voraussetzungen, insbesondere gesetzlichen Normen genügt werden.

Nachfolgend werden Ausführungsvarianten der vorliegenden Erfindung anhand von Beispielen beschrieben. Die Beispiele der Ausführungen werden durch folgende beigelegte Figuren illustriert:

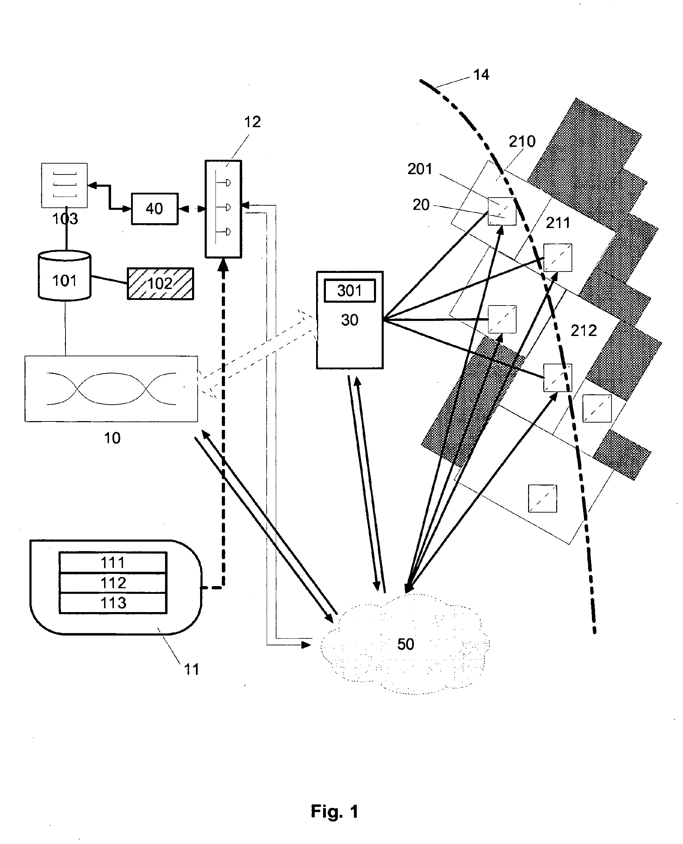

Figur 1 zeigt ein Blockdiagramm, welches schematisch die Architektur einer Ausführungsvariante eines erfindungsgemässen System zum Auf- oder Nachladen von in Schaltvorrichtungen 10 verwendeten dedizierten Speichereinheiten 101 mit einem Guthaben 103 für einen Geldbetragswert. Eine Reloadeinheit 40 überträgt das Guthaben 103 über ein Netzwerk 50 auf die einer Identifikationsnummer 102 eines Benutzers zugeordneten Speichereinheit 101, wobei mit einem Kommunikationsgerät 12 eine Zentraleinheit 30 angewählt wird und mittels dem Kommunikationsgerät 12 mindestens ein Wertcode 111 einer vorausbezahlten Wertkarte 11 und die Identifikationsnummer 102 der auf- oder nachzuladenden Speichereinheit 101 übermittelt wird.

Figur 1 illustriert eine Architektur, die zur Realisierung der Erfindung verwendet werden kann. In diesem Ausführungsbeispiel überträgt zum Auf- oder Nachladen von in Schaltvorrichtungen 10 verwendeten dedizierten Speichereinheiten 101 mit einem Guthaben 103 für einen Geldbetragswert eine Reloadeinheit 40 das Guthaben 103 über ein Netzwerk 50 auf die einer Identifikationsnummer 102 eines Benutzers zugeordneten Speichereinheit 101. Mit einem Kommunikationsgerät 12 wird eine Zentraleinheit 30 angewählt und mittels des Kommunikationsgeräts 12 mindestens ein Wertcode 111 einer vorausbezahlten Wertkarte 11 und die Identifikationsnummer 102 der auf- oder nachzuladenden Speichereinheit 101 übermittelt. Als Kommunikationsgerät 12 kann z.B. die Schaltvorrichtung 10 benutzt werden, in welche die auf- oder nachzuladende Speichereinheit 101 beispielsweise eingeführt und/oder integriert ist. Das Kommunikationsgerät 12 kann z.B. aber auch eine unabhängige Netzwerkeinheit sein. Als Kommunikationsgerät kann z.B. auch ein Mobilfunkgerät oder anderes mobiles oder fixes Netzgerät, in welches die auf- oder nachzuladende Speichereinheit 101 eingeführt ist, benutzt werden. Die Identifikation muss vom Benutzer nicht unbedingt eingegeben werden, sondern kann z.B. mit einem CLI-Modul (Calling Line Identification) mittels Anschlusserkennung der zugeordneten MSISDN oder anderen Verfahren automatisch entsprechend der Speichereinheit 101 erkannt werden. Für den Wertcode 1111 kann die Wertkarte 11 beispielsweise einen Bereich mit einem Feld 110 besitzen, welches einen Wertcode enthält. Der Wertcode und/oder die Identifikation können z.B. mittels Eingabeelemente des Kommunikationsgerätes 12 von einem Benutzer und/oder mit einem IVR-Modul (Interactive Voice Response) etc. eingegeben werden und der Zentraleinheit 30 übermittelt werden. Eine andere Möglichkeit ist, dass dem Benutzer SMS (Short Message Service) und/oder USSD (Unstructed Supplementary Service Data) Interface und/oder ein ATM-Modul (Asynchronous Transfer Mode) zur Übermittlung zur Verfügung gestellt werden. Insbesondere in Zusammenhang mit dem Auf- oder Nachladen von Speichereinheiten 101 in der Form von Chipkarten oder Kreditkarten kann die Übertragung über ein ATM-Modul geeignet sein. Die Speichereinheit 101 kann z.B. wiederentfernbar über eine kontaktbehaftete Schnittstelle mit der Schaltvorrichtung 10 verbunden sein. Die Speichereinheit 101 kann z.B. auch als fixer Bestandteil in die Schaltvorrichtung 10 integriert sein. Die Speichereinheit 101 kann jede Art von Speichermodulen umfassen, insbesondere Chipkarten wie z.B. um SIM-Karten (Subscriber Identification Module) oder Smart-Cards, wobei solchen Chipkarten als Identifikation z.B. auch eine Rufnummer zugeordnet sein kann.

Die Zentraleinheit 30 kann z.B. die Reloadeinheit 40 des Benutzers basierend auf dem Wertcode 13 mittels einer Datenbank 13 bestimmen. Die Zentraleinheit 30 kann die Reloadeinheit 40 z.B. aber auch basierend auf einer vom Benutzer der Speichereinheit 101 eingegebenen Identifikationsnummer mittels der Datenbank 13 bestimmt. Andere Ausführungsvarianten sind ebenfalls vorstellbar. Die genannte Datenbank 13 umfasst mindestens eine Liste mit den möglichen Betreiber bzw. ihrer Reloadeinheiten 40 für mögliche eingegebenen Wertcodes 111. Weiter übermittelt die Zentraleinheit 30 über einen ersten Kommunikationskanal 51 den Wertcode 111 und die Identifikationsnummer 102 oder eine Proxy- Indentifikationsnummer an die Reloadeinheit 40. Mittels der Identifikationsnummer 102 schreibt die Reloadeinheit 40 einen Geldbetragswert, der dem Wertcode 111 zugeordnet ist, der Zentraleinheit 30 gut. Die Reloadeinheit 40 kann für die Transaktion den Geldbetragswert z.B. auf einem Transferkonto der Zentraleinheit 30 z.B. bei einem Geldinstitut gutschreiben. Die Identifikationsnummer 102 oder Proxy-Identifikationsnummer kann z.B. einer bei einem Dienstanbieter der Zentraleinheit 30 zugelassenen oder abonnierten Identifikationsnummer entsprechen. Auf diese Weise sind keine weiteren vertraglichen Vereinbarungen zwischen der Zentraleinheit 30 und den Benutzern bzw. Betreibern der Reloadeinheit 40 notwendig. Es ist aber auch vorstellbar, dass die Identifikationsnummer 102 als solche von der Reloadeinheit 40 erkannt wird, um z.B. ein vereinfachtes Gutschreiben des Geldbetragwertes auf ein Transferkonto zu ermöglichen. Es ist jedoch wichtig darauf hinzuweisen, dass eine Proxy- Identifikationsnummer unabhängig von der Identifikationsnummer 102 ist, welche der auf- oder nachzuladenden Speichereinheit 101 zugeordnet ist. Die Proxy- Identifikationsnummer ist der Zentraleinheit 30 zugeordnet und kann für verschiedene Reloadprozesse unterschiedlicher auf- oder nachzuladende Speicherkarten 101 verwendet werden. Als Ausführungsvariante wartet die Zentraleinheit 30 auf Bestätigung der jeweiligen Reloadeinheit 40, dass der Wertcode 111 gültig ist und einem Geldbetragswert zugeordnet ist, und/oder auf eine Eingangsbestätigung des Geldbetragwertes auf dem Transferkonto z.B. durch das Geldinstitut, bevor sie das Auf- oder Nachladen der Speichereinheit, wie weiter unten beschrieben, durch die Reloadeinheit 40 veranlassen und/oder freigibt. Die vorausbezahlten (prepaid) oder im Lastverfahren bezahlten (postpaid) Wertkarte 11 kann neben normalen Verkaufsstellen beispielsweise bei Fahrscheinautomaten eines öffentlichen Verkehrsbetriebes, bei öffentlich zugängliche. Terminals einer Telekommunikationsgesellschaft, bei Automated Teller Machines (ATM) wie Bankomaten oder Point of Sales (POS) Terminals und/oder an dazu vorgesehenen, öffentlichen Verkaufsstellen wie Kiosken, Tabakgeschäften etc. käuflich zu erwerben sein. Es können aber auch z.B. Wertcodes 111 ohne Wertkarte 11 an Automated Teller Machines oder Point of Sales Terminals, welche die Buchung über ein Bankkonto des Benutzers, Kreditkarten oder Prepaidkarten (z.B. Smart-Cards) durchführen, bezogen werden, d.h. die Bezahlung kann im letzten Fall so erfolgen, dass der Benutzer einen Geldbetrag in das AMT oder POS einwirft und/oder dem Benutzer ein Geldbetrag über eine Kreditkarte belastet wird und/oder dem Benutzer ein Geldbetrag auf einer Chipkarte mit abgespeichertem, vorausbezahltem Geldbetrag (Prepaidkarten) belastet wird und/oder dem Benutzer ein Geldbetrag auf einem zentral abgespeicherten Konto (z.B. eine Bank- oder Postkonto) belastet wird. Das Belasten auf einer Kreditkarte kann z.B. dadurch geschehen, dass der Benutzer die Kreditkarte in das Terminal einführt und zur Identifikation einen PIN-Code (Personal Identification Number) eingibt oder dass er den Namen, die Kreditkartennummer und eventuell zusätzlich das Verfallsdatum der Kreditkarte eingibt, wie es z.B. beim Warenbezug übers Internet üblich ist.

Zelluläre Messvorrichtungen 20 erfassen Messparameter 201 in einer Vielzahl von topographischen Zellen 210/211/212 und übertragen sie an die Zentraleinheit 30, falls vordefinierte Schwellwerte der Messparameter 201 in einer topographischen Zelle 210/211/212 überschritten werden. Die Zentraleinheit 30 generiert basierend auf den übertragenen Messparameter 201 Wertzonen 14 und ordnet jede Zelle 210/211/212 eindeutig einer Wertzone 14 zu. Basierend auf den Messparametern 201 und einem aus den topographischen Zellen 210/211/212 mit Messvorrichtungen 20 bestehenden topographisches Grid 21 kann die Wertzone 14 generiert werden. De physikalischen Eigenschaften des Ereignisses ergeben die Struktur der Wertzone 14 innerhalb des Grids 21. Die Messparameter 201 können dynamisch von den Messvorrichtungen 20 an die Zentraleinheit 30 übermittelt werden, wobei die Wertzone 14 innerhalb des Grids 21 ebenfalls dynamisch angepasst wird. Anstelle einer Wertzone 14 können z.B. auch mehrere Wertzonen 14 mit unterschiedlichen Auswirkungen vom System generiert werden. Diese hat unter anderem den Vorteil, dass das System dynamisch an die Ereignisse koppelt und sich ohne irgendwelche Interaktion selbst anpasst und entsprechend automatisiert agiert. Die Wertzone 14 innerhalb des Grids 21 basiert wie erwähnt auf der physikalischen Struktur des mittels der Messvorrichtungen 20 erfassten Ereignisses. Bei Punktförmigen Auswirkungen erhält die Wertzone 14 ebenfalls Punktform oder Kreisform, wie z.B. bei Betriebsstörungen durch ein lokales Feuer oder anderen lokalen Ereignissen. Bei Erdbeben dürfte die Wertzone 14 oder die Wertzonen 14 aus konzentrischen Kreisen um das Epizentrum bestehen. Bei Wirbelstürmen erhält die Wertzone 14 eine linenförmige Ausdehnung entlang des Tracks des Wirbelsturms innerhalb des Grids 21 und den Zellen 210/211/212. Bei Überschwemmungen dürfte z.B. die topographische Uferline die Struktur der Wertzone mitbestimmen. Die Beispiele sind beliebig erweiterbar und sind nicht limitiert durch die Struktur des erfindungsgemässen Verfahrens. Im Gegenteil erlaubt die dynamische Anpassung der Wertzone 14 die Ereignisse bei der differenzierten Signalerzeugung mittels der Schaltvorrichtung automatisiert zu erfassen. Die Zentraleinheit 30 bestimmt für den übermittelten Wertcode 111 mittels einer Datenbank 13 geographische Ortsparameter 112, Werteinheiten 113 und Identifikationsnummer 102 und ordnet mittels der geographischen Ortsparametern 112 dem Wertcode 111 eine Wertzone 14 zu. Die geographischen Ortsparameter 112 können beispielsweise mindestens Längen- und Breitengraddaten insbesondere z.B. eines vordefinierten Objektes umfassen. Die Zellen 210/211/212 der Messvorrichtungen 20 können z.B. in Bezug auf alle möglichen geographischen Ortsparameter 112 der Wertcodes 111 flächendeckend angeordnet sein. Die Zentraleinheit 30 kann die Wertzonen 14 z.B. nur für Zellen 210/211/212 bestimmt, in welchen die Schwellwerte überschritten sind. Die Zentraleinheit 30 kann z.B. die übermittelten Messparameter 201 mittels eines Filtermoduls 301 auf korrelierte Ereignisse in unterschiedlichen Zellen 210/211/212 filtert, wobei das Filtermodul 301 mindestens zeitliche und/oder topographische Korrelationsparameter umfasst. Die Zentraleinheit 30 übermittelt die zugeordnete Wertzone 14, Werteinheiten 1 13 und Identifikationsnummer 102 über einen ersten Kommunikationskanal 51 an die Reloadeinheit 40 zum Auf- oder Nachladen der Speichereinheit 101. Die Reloadeinheit 40 schreibt eine Geldbetragswert entsprechend der Wertzone 14 und den Werteinheiten 113 der Speichereinheit 101 über einen zweiten Kommunikationskanal 52 mittels der Identifikationsnummer 102 gut, wobei die Schaltvorrichtung 10 basierend auf dem nachgeladenen Geldbetragswert der Speichereinheit 101 aktiviert wird. Die Kommunikationskanäle 50/51/52 zwischen der Zentraleinheit 30 und der Reloadeinheit 40 können z.B. ein Telekommunikationsnetz, beispielsweise ein Festnetz, wie ein LAN (Local Area Network) oder WAN (Wide Area Network), das öffentliche geschaltete Telefonnetz (PSTN, Public Switched Telephone Network und/oder ISDN (Integrated Services Digital Network), das Internet oder ein anderes Kommunikationsnetz, insbesondere ein Mobilfunknetz umfassen. Insbesondere kann die Zentraleinheit 30 mit der Reloadeinheit 40 über das Telekommunikationsnetz 50 und/oder ein direktes Datenübertragungsnetz 51 /52 verbunden sein. Die Kommunikation zwischen der Zentraleinheit und der Reloadeinheit 40 kann z.B. über ein TCP/IP-Interface und/oder CORPA-Interface, ein ATM-Modul, ein SMS- und/oder USSD-Gateway mittels speziellen Kurzmeldungen, beispielsweise SMS- (Short Message Services), USSD- (Unstructured Supplementary Services Data) Meldungen oder andere Techniken wie MExE (Mobile Execution Environment), über Protokolle wie GPRS (Generalized Packet Radio Service), WAP (Wireless Application Protokoll) oder über einen Nutzkanal erfolgen. Der Datentransfer zwischen der Zentraleinheit 30 und der Reloadeinheit 40 wird z.B. über software- oder hardwaremässig implementierte Transfermodule der Zentraleinheit 30 sowie der Reloadeinheiten 40 eingeleitet und durchgeführt.

Die Reloadeinheit 40 lädt über das Telekommunikationsnetz 50 die Speichereinheit 101 der Schaltvorrichtung 10 auf- bzw. nach. Das Telekommunikationsnetz 50 kann z.B. mindestens ein Mobilfunknetz umfassen. Das Mobilfunknetz kann z.B. ein GSM-, ein UMTS- oder ein anderes Mobilfunknetz 50 sein. Die Kommunikation über das Mobilfunknetz 50 erfolgt beispielsweise mittels speziellen Kurzmeldungen, beispielsweise SMS- (Short Message Services), USSD- (Unstructured Supplementary Services Data) Meldungen oder andere Techniken wie MExE (Mobile Execution Environment), über Protokolle wie GPRS (Generalized Packet Radio Service), WAP (Wireless Applicaton Protokoll) oder über einen Nutzkanal. In einer Ausführungsvariante umfasst die Zentraleinheit 30 ein Umrechnungsmodul, womit sie den Geldbetragswert in die Heimwährung des Benutzers oder Betreibers der Reloadeinheit 40 umrechnet, bevor sie den Geldbetragswert mit der Identifikationsnummer 102 der Speichereinheit 101 an die Reloadeinheit 40 übermittelt. Damit sind alle Teile des Systems netzwerk- und länderunabhängig realisierbar. Die Zentraleinheit 30 kann die Reloadeinheit 40 z.B. basierend auf der Identifikationsnummer 102, welche der auf- oder nachzuladenden Speichereinheit 101 zugeordnet ist, mittels der Datenbank 13 bestimmt. Als Ausführungsvariante ist es aber auch möglich, dass die Reloadeinheit 40 z.B. basierend auf einer vom Benutzer der Speichereinheit 102 eingegebenen Identifikationsnummer und/oder -code mittels der Datenbank 13 bestimmt wird. Dies wurde bereits weiter oben erwähnt.

Die Zentraleinheit 30 kann z.B. den Geldbetragswert vorgängig auch auf einem Transferkonto der Reloadeinheit 30 gutschreiben, was eine Standortsunabhängige Realisierung der Zentraleinheit 30 ermöglicht. Das Auf- oder Nachladen der Speichereinheit 101, geschieht wie erwähnt dadurch, dass durch Übermitteln von Informationen, welche Informationen mindestens einen Wertcode 111 einer vorausbezahlten Wertkarte 11 und eine Identifikation der auf- oder nachzuladenden Speichereinheit 101 umfassen, mit einem Kommunikationsgerät an eine Zentraleinheit 30 wird dem Benutzer ein Guthaben in der Zentraleinheit 30 zugeordnet und abgespeichert. Der Datentransfer wird z.B. über ein software- oder hardwaremässig implementiertes Transfermodul des Kommunikationsgerätes bzw. der Reloadeinheit 40 eingeleitet und durchgeführt.

Die Schaltvorrichtung 10 kann z.B. basierend auf der Aktivierung und der Identifikationsnummer 102 Alarm- und/oder Notfallsignale generieren und auf selektierte Vorrichtungen übertragen. D.h. Mittels einer Sensorik der Messvorrichtungen 20 können z.B. topographisch festlegbare Ereignisse wie Naturkatastrophen, Erdbeben, Feuer, Überschwemmungen etc. daraus folgende Betriebsstörung bei dem lokalisierten Objekt detektiert und mittels der Schaltvorrichtung 10 werden für die Betriebsstörung oder anderen Notfallinterventionen dedizierte Aktivierungssignaldaten generiert und auf ein entsprechendes, automatisiertes Interventionsmittel und/oder Vorrichtungen übertragen. Mittels der Interventionsmittel oder anderen Vorrichtungen kann dann z.B. die Betriebsstörung, ohne dass Interaktion des Benutzers notwenig ist, automatisiert behoben werden, falls die Speicheeinheit entsprechend nachgeladen ist. Die Vorrichtungen können z.B. automatisierte Notfallinterventionssystem wie z.B. automatisch ausgelöste Löschsysteme, Stromunterbruchs- oder Notgeneratorsysteme, Betriebskontrollsysteme mit automatisierten Steuer- und/oder Alarmvorrichtungen, Signalumwandlungs- oder Relaissysteme zur automatisierten Alarm- oder Kontrollsteuerauslösung etc. umfassen. Die Vorrichtungen können zur automatisierten Notfallintervention bei Betriebsstörungen mittels einer Kontroll- und/oder Alarmvorrichtung uni- oder bidirektional mit dem Objekt verbunden sein. Die Verbindung kann über eine luft- und/oder landgestützte Verbindung, insbesondere fest verbunden und/oder drahtlos, erfolgen. Die Messvorrichtungen 20 und/oder deren Sensorik kann z.B. Sensoren zur Windgeschwindigkeit-, Wärme-/Kälte- und/oder Fruchtigkeits-/Wasserpegelmessung oder anderen Messparameter umfassen. Die Sensorik 20 kann z.B. auch ein Ortserfassungsmodul umfassen, mittels welchem Ortserfassungsmoduls Ortskoordinatenparameter des aktuellen Standortes bei mobilen Objekten generiert werden und mittels der Messvorrichtung 20 auf die Zentraleinheit 30 und/oder Schaltvorrichtung 10 übermittelt werden.

Pro Wertkarte 11 und Wertcode 11 nur eine Werteinheit 1 13 zugeordnet wird. Damit kann z.B. die Wertkarten z.B. in einer Art Coupon-System vom Benutzer frei gekauft werden. Anhand der Anzahl Wertkarten kann er im Spezialfall Behebung von Betriebsstörungen durch Signalgenerierung der Schaltvorrichtung das nachgeladenen Guthaben oder die Deckung selbst seinen Bedürfnissen wie objektive Kriterien z.B. Grösse oder Wert des Objektes oder subjektive Kriterien z.B. persönliches Sicherheitsbedürfnis oder vorhandene Eigenmittel anpassen. Jede Wertkarte 11 kann z.B. einem an den geographischen Ortsparametern 112 befindlichen Objekt fest zugeordnet sein. Damit kann z.B. der Dienstanbieter des Systems eine gewisse Sicherheit in Bezug auf den Benutzer erhalten. Ebenfalls kann damit z.B. länderspezifische Voraussetzungen, insbesondere gesetzlichen Normen genügt werden.

### Liste der Bezugszeichen

- 10: Schaltvorrichtungen
101 Speichereinheit
102 Identifikationsnummer
- 11: Wertkarte
110 Feld mit Wertcode
111 Wertcode
112 Geographische Ortsparameter
113 Werteinheiten
- 12: Kommunikationsgerät
- 13: Datenbank
- 14: Wertzone
- 20: Zelluläre Messvorrichtungen
201 Messparameter
- 21: Grid
- 210: Topographischen Zelle
- 21: 1 Topographischen Zelle
- 212: Topographischen Zelle
- 30: Zentraleinheit
301
- 40: Reloadeinheit
- 50: Telekommunikationsnetz
- 51/52: Kommunikationskanal

## Patentansprüche

1. Verfahren zum Auf- oder Nachladen von in Schaltvorrichtungen (10) verwendeten dedizierten Speichereinheiten (101) mit einem Guthaben (103) für einen Geldbetragswert, in welchem Verfahren eine Reloadeinheit (40) das Guthaben (103) über ein Netzwerk (50) auf die einer Identifikationsnummer (102) eines Benutzers zugeordneten Speichereinheit (101) überträgt, wobei mit einem Kommunikationsgerät (12) eine Zentraleinheit (30) angewählt wird und mittels dem Kommunikationsgerät (12) mindestens ein Wertcode (111) einer vorausbezahlten Wertkarte (11) und die Identifikationsnummer (102) der auf- oder nachzuladenden Speichereinheit (101) übermittelt wird, **dadurch gekennzeichnet,**
**dass** zelluläre Messvorrichtungen (20) Messparameter (201) in einer Vielzahl von topographischen Zellen (210/211/212) erfassen und an die Zentraleinheit (30) übertragen, falls vordefinierte Schwellwerte der Messparameter (201) in einer topographischen Zelle (210/211/212) überschritten werden,
**dass** die Zentraleinheit (30) basierend auf den übertragenen Messparameter (201) und einem aus den topographischen Zellen (210/211/212) bestehenden topographischen Grid (21) Wertzonen (14) generiert, wobei die Struktur der generierten Wertzonen die physikalischen Eigenschaften des mittels der Messvorrichtungen 20 erfassten Ereignisses innerhalb des Grids (21) wiedergibt,
**dass** die Zentraleinheit (30) für den übermittelten Wertcode (111) mittels einer Datenbank (13) geographische Ortsparameter (112), Werteinheiten (113) und Identifikationsnummer (102) bestimmt, und mittels der geographischen Ortsparametern (112) dem Wertcode (111) eine Wertzone (14) zuordnet,
**dass** die Zentraleinheit (30) die zugeordnete Wertzone (14), die Werteinheiten (113) und die Identifikationsnummer (102) über einen ersten Kommunikationskanal (51) an die Reloadeinheit (40) zum Auf- oder Nachladen der Speichereinheit (101) übermittelt, und
**dass** ein Geldbetragswert dem Wertcode (111) zugeordnet wird, wobei die Reloadeinheit (40) den Geldbetragswert entsprechend der Wertzone (14) und den Werteinheiten (113) zuordnet und der Speichereinheit (101) über einen zweiten Kommunikationskanal (52) mittels der Identifikationsnummer (102) gutschreibt, wobei die Schaltvorrichtung (10) basierend auf dem nachgeladenen Geldbetragswert der Speichereinheit (101) aktiviert wird.

2. Verfahren zum Auf- oder Nachladen von in Schaltvorrichtungen (10) verwendeten dedizierten Speichereinheiten (101) nach Anspruch 2, **dadurch gekennzeichnet, dass** die Messparameter (201) dynamisch an die Messvorrichtungen (20) übermittelt werden, wobei die Wertzone (14) innerhalb des Grids (21) dynamisch angepasst wird.

3. Verfahren zum Auf- oder Nachladen von In Schaltvorrichtungen (10) verwendeten dedizierten Speichereinheiten (101) nach einem der Ansprüche 1 oder 2, **dadurch gekennzeichnet, dass** als Kommunikationsgerät (12) die Schaltvorrichtung (10) benutzt wird, in welche die auf- oder nachzuladende Speichereinheit (101) eingeführt und/oder integriert ist.

4. Verfahren zum Auf- oder Nachladen von in Schaltvorrichtungen (10) verwendeten dedizierten Speichereinheiten (101) nach einem der Ansprüche 1 bis 3, **dadurch gekennzeichnet, dass** die Schaltvorrichtung (10) basierend auf der Aktivierung und der Identifikationsnummer (102) Alarm- und/oder Notfallsignale generiert und auf selektierte Vorrichtungen überträgt.

5. Verfahren zum Auf- oder Nachladen von in Schaltvorrichtungen (10) verwendeten dedizierten Speichereinheiten (101) nach einem der Ansprüche 1 bis 4, **dadurch gekennzeichnet, dass** die Zellen (210/211/212) der Messvorrichtungen (20) in Bezug auf alle möglichen geographischen Ortsparameter (112) der Wertcodes (111) flächendeckend angeordnet sind.

6. Verfahren zum Auf- oder Nachladen von in Schaltvorrichtungen (10) verwendeten dedizierten Speichereinheiten (101) nach einem der Ansprüche 1 bis 5, **dadurch gekennzeichnet, dass** die Zentraleinheit (30) die Wertzonen (14) nur für Zellen (210/211/212) bestimmt, in welchen die Schwellwerte überschritten sind.

7. Verfahren zum Auf- oder Nachladen von in Schaltvorrichtungen (10) verwendeten dedizierten Speichereinheiten (101) nach einem der Ansprüche 1 bis 6, **dadurch gekennzeichnet, dass** die geographischen Ortsparameter (112) mindestens Längen- und Breitengraddaten umfassen.

8. Verfahren zum Auf- oder Nachladen von in Schaltvorrichtungen (10) verwendeten dedizierten Speichereinheiten (101) nach einem der Ansprüche 1 bis 7, **dadurch gekennzeichnet, dass** die Zentraleinheit (30) die übermittelten Messparameter (201) auf korrelierte Ereignisse In unterschiedlichen Zellen (210/211/212) filtert, wobei ein entsprechendes Filtermodul (301) mindestens zeitliche und/oder topographische Korrelationsparameter umfasst.

9. Verfahren zum Auf- oder Nachladen von in Schaltvorrichtungen (10) verwendeten dedizierten Speichereinheiten (101) nach einem der Ansprüche 1 bis 8, **dadurch gekennzeichnet, dass** die Zentraleinheit (30) den Geldbetragswert auf einem Transferkonto der Reloadeinheit (30) gutschreibt.

10. Verfahren zum Auf- oder Nachladen von in Schaltvorrichtungen (10) verwendeten dedizierten Speichereinheiten (101) nach einem der Ansprüche 1 bis 9, **dadurch gekennzeichnet, dass** die Zentraleinheit (30) die Reloadeinheit (40) des Benutzers basierend auf dem Wertcode (13) mittels der Datenbank (13) bestimmt.

11. Verfahren zum Auf- oder Nachladen von in Schaltvorrichtungen (10) verwendeten dedizierten Speichereinheiten (101) nach einem der Ansprüche 1 bis 10, **dadurch gekennzeichnet, dass** die Zentraleinheit (30) die Reloadeinheit (40) basierend auf einer vom Benutzer der Speichereinheit (101) eingegebenen Identifikationsnummer mittels der Datenbank (13) bestimmt.

12. Verfahren zum Auf- oder Nachladen von in Schaltvorrichtungen (10) verwendeten dedizierten Speichereinheiten (101) nach einem der Ansprüche 1 bis 11, **dadurch gekennzeichnet, dass** die Speichereinheit (101) wiederentfernbar über eine kontaktbehaftete Schnittstelle mit der Schaltvorrichtung (10) verbunden wird.

13. Verfahren zum Auf- oder Nachladen von in Schaltvorrichtungen (10) verwendeten dedizierten Speichereinheiten (101) nach einem der Ansprüche 1 bis 12, **dadurch gekennzeichnet, dass** die Speichereinheit (101) als fixer Bestandteil In die Schaltvorrichtung (10) integriert wird.

14. Verfahren zum Auf- oder Nachladen von In Schaltvorrichtungen (10) verwendeten dedizierten Speichereinheiten (101) nach einem der Ansprüche 1 bis 13, **dadurch gekennzeichnet, dass** pro Wertkarte (11) und Wertcode (11) nur eine Werteinheit (113) zugeordnet wird.

15. Verfahren zum Auf- oder Nachladen von in Schaltvorrichtungen (10) verwendeten dedizierten Speichereinheiten (101) nach einem der Ansprüche 1 bis 14, **dadurch gekennzeichnet, dass** jede Wertkarte (11) einem an den geographischen Ortsparametern (112) befindlichen Objekt zugeordnet ist.

16. System zum Auf- oder Nachladen von in Schaltvorrichtungen (10) verwendeten dedizierten Speichereinheiten (101) mit einem Guthaben für einen Geldbetragswert, welches System mindestens eine mit einer Zentraleinheit (30) verbundene Reloadeinheit (40), sowie mindestens eine Schaltvorrichtung (10) mit einer Speichereinheit (101), die einer Identifikationsnummer (102) eines Benutzers zugeordnet ist, umfasst, wobei die Reloadeinheit (40) Mittel zum Auf- oder Nachladen der Speichereinheit (101) mit dem Guthaben über ein Netzwerk (50) basierend auf der Identifikationsnummer (102) des Benutzers umfasst, **dadurch gekennzeichnet,**
**dass** die Zentraleinheit (30) zelluläre Messvorrichtungen (20) zum Erfassen von Messparameter (201)in einer Vielzahl von topographischen Zellen (210/211/212) umfasst, welche Messvorrichtungen (20) mit der Zentraleinheit (30) uni- oder bidirektional verbunden sind, wobei mittels der Zentraleinheit (30), falls vordefinierte Schwellwerte der Messparameter (201) in einer topographischen Zelle (210/211/212) überschritten sind, basierend auf übertragenen Messparameter (201) Wertzonen (14) generierbar sind und jede Zelle (210/211/212) eindeutig einer Wertzone zuordenbar ist,
**dass** die Zentraleinheit (30) eine Datenbank (13) mit geographische Ortsparameter (112), Werteinheiten (113) und Identifikationsnummer (102) umfasst, wobei jedem Wertcode (111) entsprechende geographische Ortsparameter (112), Werteinheiten (113) und Identifikationsnummer (102) zugeordnet ist und mittels der geographischen Ortsparametern (112) dem Wertcode (111) eine Wertzone (14) zuordenbar ist,
**dass** mittels der Zentraleinheit (30) zugeordnete Wertzone (14), Werteinheiten (113) und Identifikationsnummer (102) über einen ersten Kommunikationskanal (51) an die Reloadeinheit (40) zum Auf- oder Nachladen des Speichermoduls übermittelbar sind, und
**dass** die Reloadeinheit (40) eine Geldbetragswert entsprechend der Wertzone (14) und den Werteinheiten (113) der Speichereinheit (101) über einen zweiten Kommunikationskanal (52) mittels der Identifikationsnummer (102) gutschreibbar ist wobei die Schaltvorrichtung (30) basierend auf dem nachgeladenen Geldbetragswert der Speichereinheit (101) aktiviert ist.

17. System zum Auf- oder Nachladen von in Schaltvorrichtungen verwendeten dedizierten Speichereinheiten nach Anspruch 16, **dadurch gekennzeichnet, dass** das Kommunikationsgerät die Schaltvorrichtung (10) ist, In welche die auf- oder nachzuladende Chipkarte eingeführt und/oder integriert ist.

18. System zum Auf- oder Nachladen von in Schaltvorrichtungen (10) verwendeten dedizierten Speichereinheiten (101) nach einem der Ansprüche 16 oder 17, **dadurch gekennzeichnet, dass** mittels der Schaltvorrichtung (10) Alarm- und/oder Notfallsignale basierend auf der Aktivierung und der Identifikationsnummer (102) generierbar sind und auf entsprechende Vorrichtungen übertragbar sind.

19. System zum Auf- oder Nachladen von in Schaltvorrichtungen (10) verwendeten dedizierten Speichereinheiten (101) nach einem der Ansprüche 16 bis 18, **dadurch gekennzeichnet, dass** die Zellen (210/211/212) der Messvorrichtungen(20) in Bezug auf alle möglichen geographischen Ortsparameter (112) der Wertcodes (111) flächendeckend angeordnet sind.

20. System zum Auf- oder Nachladen von in Schaltvorrichtungen (10) verwendeten dedizierten Speichereinheiten (101) nach einem der Ansprüche 16 bis 19, **dadurch gekennzeichnet, dass** mittels der Zentraleinheit (30) die Wertzonen (14) nur für Zellen (210/211/212) zugeordnet sind, In welchen die Schwellwerte überschritten sind.

21. System zum Auf- oder Nachladen von in Schaltvorrichtungen (10) verwendeten dedizierten Speichereinheiten (101) nach einem der Ansprüche 16 bis 20, **dadurch gekennzeichnet, dass** die geographischen Ortsparameter (112) mindestens Längen- und Breitengraddaten umfassen.

22. System zum Auf- oder Nachladen von in Schaltvorrichtungen (10) verwendeten dedizierten Speichereinheiten (101) nach einem der Ansprüche 16 bis 21, **dadurch gekennzeichnet, dass** die Zentraleinheit (30) ein Filtermodul (301) zum Filtern der übermittelten Messparameter (201) auf korrelierte Ereignisse in unterschiedlichen Zellen (210/211/212) umfasst, wobei ein entsprechendes Filtermodul (301) mindestens zeitliche und/oder topographische Korrelationsparameter umfasst.

23. System zum Auf- oder Nachladen von in Schaltvorrichtungen (10) verwendeten dedizierten Speichereinheiten (101) nach einem der Ansprüche 16 bis 22, **dadurch gekennzeichnet, dass** die Speichereinheit (101) wiederentfernbar über eine kontaktbehaftete Schnittstelle mit der Schaltvorrichtung (10) verbunden ist.

24. System zum Auf- oder Nachladen von In Schaltvorrichtungen (10) verwendeten dedizierten Speichereinheiten (101) nach einem der Ansprüche 16 bis 23, **dadurch gekennzeichnet, dass** die Speichereinheit (101) als fixer Bestandteil in das Schaltvorrichtung (10) integriert wird.

## Claims

1. A method for loading or reloading of dedicated storage units (101) used in switching devices (10) with a credit value (103) for a monetary value, in which method a reload unit (40) transfers the credit value via a network (50) to the storage unit (101) assigned to the identification number (102) of a user, wherein a communication apparatus (12) dials a central processor (30) and by means of the communication apparatus (12), at least one value code (111) of a pre-paid stored-value card (11) and the identification number (102) of the storage unit (10) to be loaded or reloaded is transmitted, **characterized in**
**that** cellular measuring devices (20) detect measured parameters (201) in a plurality of topographic cells (210/211/212) and transmits said parameters to the central processor if predefined threshold values of the measured parameters (201) are exceeded in a topographic cell (210/211/212),
**that** the central processor (30) generates value zones (14) based on the transmitted measured parameters (201) and a topographic grid (12) consisting of the topographic cells (210/211/212), wherein the structure of the generated value zones reflects the physical properties of the event detected by means of the measurement devices 20 within the grid (21),
**that** the central processor (30), by means of a data base (13), determines geographic location parameters (112), value units (113) and identification number (102) for the transmitted value code (111) and, by means of the geographic location parameter (112), assigns a value zone (14) to the value code (111),
**that** the central processor (30) transmits the assigned value zone (14), the value units (113) and the identification number (102) via a first communication channel (51) to the reload unit (40) for loading or reloading the storage unit (101), and
**that** a monetary value is assigned to the value code (111), wherein the reload unit (40) assigns the monetary value corresponding to the value zone (14) and the value units (113) and credits the monetary value to the storage unit (101) via a second communication channel (52) by means of the identification number (102), wherein the switching device (10) is activated based on the reloaded monetary value of the storage unit (101).

2. The method for loading or reloading of dedicated storage units (101) used in switching devices (10) according to claim 2, **characterized in that** the measured parameters (201) are dynamically transmitted to the measuring devices (20), wherein the value zone (14) within the grid (21) is dynamically adapted.

3. The method for loading or reloading of dedicated storage units (101) used in switching devices (10) according to any one of the claims 1 or 2, **characterized in that** as communication apparatus (12), the switching device (10) is used in which the storage unit (101) to be loaded or reloaded is inserted and/or integrated.

4. The method for loading or reloading of dedicated storage units (101) used in switching devices (10) according to any one of the claims 1 to 3, **characterized in that** the switching device (10) generates alarm and/or emergency signals based on the activation and the identification number (102) and transmits them to selected devices.

5. The method for loading or reloading of dedicated storage units (101) used in switching devices (10) according to any one of the claims 1 to 4, **characterized in that** the cells (210/211/212) of the measuring devices (20) are arranged providing full coverage with respect to all possible geographic location parameters (112) of the value codes (111).

6. The method for loading or reloading of dedicated storage units (101) used in switching devices (10) according to any one of the claims 1 to 5, **characterized in that** the central processor (30) determines the value zones (14) only for cells (210/211/212) in which the threshold values are exceeded.

7. The method for loading or reloading of dedicated storage units (101) used in switching devices (10) according to any one of the claims 1 to 6, **characterized in that** the geometrical location parameters (112) comprise at least longitude and latitude data.

8. The method for loading or reloading of dedicated storage units (101) used in switching devices (10) according to any one of the claims 1 to 7, **characterized in that** the central processor (30) filters the transmitted measured parameters (201) for correlated events in different cells (210/211/212), wherein an adequate filter module (301) comprises at least temporal and/or topographic correlation parameters.

9. The method for loading or reloading of dedicated storage units (101) used in switching devices (10) according to any one of the claims 1 to 8, **characterized in that** the central processor (30) credits the monetary value to a transfer account of the reload unit (30).

10. The method for loading or reloading of dedicated storage units (101) used in switching devices (10) according to any one of the claims 1 to 9, **characterized in that** the central processor (30) determines the reload unit (40) of the user based on the value code (13) by means of the data base (13).

11. The method for loading or reloading of dedicated storage units (101) used in switching devices (10) according to any one of the claims 1 to 10, **characterized in that** the central processor (30) determines the reload unit (40) based on an identification number entered by the user of the storage unit (101) and by means of the data base (13).

12. The method for loading or reloading of dedicated storage units (101) used in switching devices (10) according to any one of the claims 1 to 11, **characterized in that** the storage unit (101) is removably connected to the switching device (10) via a contact interface.

13. The method for loading or reloading of dedicated storage units (101) used in switching devices (10) according to any one of the claims 1 to 12, **characterized in that** the storage unit (101) is integrated as fixed component into the switching device (10).

14. The method for loading or reloading of dedicated storage units (101) used in switching devices (10) according to any one of the claims 1 to 13, **characterized in that** per stored-value card (11) and value code (11), only one value unit (113) is assigned.

15. The method for loading or reloading of dedicated storage units (101) used in switching devices (10) according to any one of the claims 1 to 14, **characterized in that** each stored-value card (11) is assigned to an object located at one of the geographic location parameters (112).

16. A system for loading or reloading of dedicated storage units (101) used in switching devices (10) with a credit value (103) for a monetary value, which system comprises at least one reload unit (40) which is connected to a central processor (30) and at least one switching device (10) with a storage unit (101) which is assigned to an identification number (102) of a user, wherein the reload unit (40) comprises means for loading or reloading the storage unit (101) with the credit value via a network (50) and based on the identification number (102) of the user, **characterized in**
**that** the central processor (30) comprises cellular measuring devices (20) for detecting measured parameters (201) in a plurality of topographic cells (210/211/212), which measuring devices (20) are unidirectionally or bidirectionally connected to the central processor (30), wherein by means of the central processor (30), if predefined threshold values of the measured parameters (201) in a topographic cell (210/211/212) are exceeded, value zones (14) can be generated based on the transmitted measured parameters (201) and each cell (210/211/212) can be uniquely assigned to a value zone,
**that** the central processor (30) comprises a data base (13) with geographic location parameters (112), value units (113) and identification number (102), wherein to each value code (111), corresponding geographic location parameters (112), value units (113) and identification number (102) are assigned and by means of the geographic location parameters (112), a value zone (14) can be assigned to the value code (111),
**that** by means of the central processor (30), the assigned value zone (14), value units (113) and identification number (102) can be transmitted via a first communication channel (51) to the reload unit (40) for loading or reloading the storage module, and
**that** the reload (40) credits a monetary value corresponding to the value zone (14) and the value units (113) to the storage unit (101) via a second communication channel (52) by means of the identification number (102), wherein the switching device (30) is activated based on the reloaded monetary value of the storage unit (101).

17. The system for loading or reloading of dedicated storage units (101) used in switching devices according to claim 16, **characterized in that** the communication apparatus is the switching device (10) in which the chip card to be loaded or reloaded is inserted and/or integrated.

18. The system for loading or reloading of dedicated storage units (101) used in switching devices (10) according to any one of the claims 16 or 17, **characterized in that** by means of the switching device (10), alarm and/or emergency signals can be generated based on the activation and the identification number (102) and can be transmitted to adequate devices.

19. The system for loading or reloading of dedicated storage units (101) used in switching devices (10) according to any one of the claims 16 to 18, **characterized in that** the cells (210/211/212) of the measuring devices (20) are arranged providing full coverage with respect to all possible geographic location parameters (112) of the value codes (111).

20. The system for loading or reloading of dedicated storage units (101) used in switching devices (10) according to any one of the claims 16 to 19, **characterized in that** by means of the central processor (30), the value zones (14) are only assigned for cells (210/211/212) in which the threshold values are exceeded.

21. The system for loading or reloading of dedicated storage units (101) used in switching devices (10) according to any one of the claims 16 to 20, **characterized in that** the geographic location parameters (112) comprise at least longitude and latitude data.

22. The system for loading or reloading of dedicated storage units (101) used in switching devices (10) according to any one of the claims 16 to 21, **characterized in that** the central processor comprises a filter module (301) for filtering the transmitted measured parameters (201) for correlated events in different cells, wherein an adequate filter module (301) comprises at least temporal and/or topographical correlation parameters.

23. The system for loading or reloading of dedicated storage units (101) used in switching devices (10) according to any one of the claims 16 to 22, **characterized in that** the storage unit (101) is removably connected via a contact interface to the switching device (10).

24. The system for loading or reloading of dedicated storage units (101) used in switching devices (10) according to any one of the claims 16 to 23, **characterized in that** the storage unit (101) is integrated as fixed component into the switching device (10).

## Revendications

1. Procédé pour le chargement et le rechargement d'unités de mémoire dédiées (101) utilisées dans des dispositifs de commutation (10) avec un avoir (103) pour une valeur d'argent, où dans ledit procédé une unité de reload (40) transfère l'avoir (103) à travers un réseau (50) sur l'unité de mémoire (101) qui est associée à un numéro d'identification (102) d'un utilisateur, où un appareil de communication (12) accède à une unité centrale (30) et au moyen de l'appareil de communication (12) est transmis au moins un code de valeur (111) d'une carte de valeur prépayée (11) et le numéro d'identification (102) de l'unité de mémoire (101) à charger ou à recharger, **caractérisé**
**en ce que** des dispositifs de mesure cellulaires (20) saisissent des paramètres de mesure (201) dans une pluralité de cellules topographiques (210/211/212) et les transfèrent à l'unité centrale (30), si les valeurs de seuil prédéfinies des paramètres de mesure (201) dans une cellule topographique (210/211/212) sont dépassées,
**en ce que** l'unité centrale (30) génère des zones de valeur (14) en se basant sur les paramètres de mesure transmis (201) et une grille topographique (21) composée des cellules topographiques (210/211/212), où la structure des zones de valeur générées représente les propriétés physiques de l'événement saisi au moyen du dispositif de mesure (20) à l'intérieur de la grille (21),
**en ce que** l'unité centrale (30) détermine pour le code de valeur transmis (111) au moyen d'une base de données (13) des paramètres de lieu géographique (112), des unités de valeur (113) et des numéros d'identification (102), et associe au moyen des paramètres de lieu géographique (112) une zone de valeur (14) au code de valeur (111),
**en ce que** l'unité centrale (30) transmet la zone de valeur associée (14), les unités de valeur (113) et le numéro d'identification (102) à l'unité de reload (40) à travers un premier canal de communication (51) pour le chargement et le rechargement de l'unité de mémoire (101), et
**en ce que** la valeur d'argent est associée au code de valeur (111), où l'unité de reload (40) associe la valeur de l'argent en fonction de la zone de valeur (14) et des unités de valeur (113) et la crédite à l'unité de mémoire (101) à travers un deuxième canal de communication (52) au moyen du numéro d'identification (102), où le dispositif de commutation (10) est activé en se basant sur la valeur de l'argent rechargée de l'unité de mémoire (101).

2. Procédé pour le chargement et le rechargement d'unités de mémoire dédiées (101) utilisées dans des dispositifs de commutation (10) selon la revendication 2, **caractérisé en ce que** les paramètres de mesure (201) sont transmis de manière dynamique aux dispositifs de mesure (20), où la zone de valeur (14) est ajustée de manière dynamique à l'intérieur de la grille (21).

3. Procédé pour le chargement et le rechargement d'unités de mémoire dédiées (101) utilisées dans des dispositifs de commutation (10) selon l'une quelconque des revendications 1 ou 2, **caractérisé en ce que** le dispositif de commutation (10), dans lequel l'unité de mémoire (101) à charger ou à recharger est introduite et/ ou intégrée, est utilisé en tant qu'appareil de communication (12).

4. Procédé pour le chargement et le rechargement d'unités de mémoire dédiées (101) utilisées dans des dispositifs de commutation (10) selon l'une quelconque des revendications 1 à 3, **caractérisé en ce que** le dispositif de commutation (10), en se basant sur l'activation et le numéro d'identification (102), génère des signaux d'alarme et/ou de détresse et les transmet aux dispositifs sélectionnés.

5. Procédé pour le chargement et le rechargement d'unités de mémoire dédiées (101) utilisées dans des dispositifs de commutation (10) selon l'une quelconque des revendications 1 à 4, **caractérisé en ce que** les cellules (210/211/212) des dispositifs de mesure (20) sont disposées de manière à couvrir toute la surface par rapport à tous les paramètres de lieu géographique (112) des codes de valeur (111) possibles.

6. Procédé pour le chargement et le rechargement d'unités de mémoire dédiées (101) utilisées dans des dispositifs de commutation (10) selon l'une quelconque des revendications 1 à 5, **caractérisé en ce que** l'unité centrale (30) détermine les zones de valeur (14) uniquement pour les cellules (210/211/212), dans lesquelles les valeurs de seuil sont dépassées.

7. Procédé pour le chargement et le rechargement d'unités de mémoire dédiées (101) utilisées dans des dispositifs de commutation (10) selon l'une quelconque des revendications 1 à 6, **caractérisé en ce que** les paramètres de lieu géographique (112) comprennent au moins des données de longitude et de latitude.

8. Procédé pour le chargement et le rechargement d'unités de mémoire dédiées (101) utilisées dans des dispositifs de commutation (10) selon l'une quelconque des revendications 1 à 7, **caractérisé en ce que** l'unité centrale (30) filtre les paramètres de mesure transmis (201) par rapport à des événements corrélés dans différentes cellules (210/211/212), où un module de filtrage correspondant (301) comprend au moins des paramètres de corrélation temporels et/ou topographiques.

9. Procédé pour le chargement et le rechargement d'unités de mémoire dédiées (101) utilisées dans des dispositifs de commutation (10) selon l'une quelconque des revendications 1 à 8, **caractérisé en ce que** l'unité centrale (30) crédite la valeur de l'argent sur un compte de transfert de l'unité de reload (30).

10. Procédé pour le chargement et le rechargement d'unités de mémoire dédiées (101) utilisées dans des dispositifs de commutation (10) selon l'une quelconque des revendications 1 à 9, **caractérisé en ce que** l'unité centrale (30) détermine au moyen de la base de données (13) l'unité de reload (40) de l'utilisateur en se basant sur le code de valeur (13).

11. Procédé pour le chargement et le rechargement d'unités de mémoire dédiées (101) utilisées dans des dispositifs de commutation (10) selon l'une quelconque des revendications 1 à 10, **caractérisé en ce que** l'unité centrale (30) détermine au moyen de la base de données (13) l'unité de reload (40) en se basant sur un numéro d'identification saisi par l'utilisateur de l'unité de mémoire (101).

12. Procédé pour le chargement et le rechargement d'unités de mémoire dédiées (101) utilisées dans des dispositifs de commutation (10) selon l'une quelconque des revendications 1 à 11, **caractérisé en ce que** l'unité de mémoire (101) est reliée de manière amovible au dispositif de commutation (10) à travers une interface de contact.

13. Procédé pour le chargement et le rechargement d'unités de mémoire dédiées (101) utilisées dans des dispositifs de commutation (10) selon l'une quelconque des revendications 1 à 12, **caractérisé en ce que** l'unité de mémoire (101) est intégrée en tant que composant fixe dans le dispositif de commutation (10).

14. Procédé pour le chargement et le rechargement d'unités de mémoire dédiées (101) utilisées dans des dispositifs de commutation (10) selon l'une quelconque des revendications 1 à 13, **caractérisé en ce qu'**une seule unité de valeur (113) est associée par carte de valeur (11) et code de valeur (11).

15. Procédé pour le chargement et le rechargement d'unités de mémoire dédiées (101) utilisées dans des dispositifs de commutation (10) selon l'une quelconque des revendications 1 à 14, **caractérisé en ce que** chaque carte de valeur (11) est associée à un objet qui se situe aux paramètres de lieu géographique (112).

16. Système pour le chargement et le rechargement d'unités de mémoire dédiées (101) utilisées dans des dispositifs de commutation (10) avec un avoir pour une valeur d'argent, où ledit système comprend au moins une unité de reload (40) reliée à une unité centrale (30), ainsi qu'au moins un dispositif de commutation (10) avec une unité de mémoire (101), qui est associée à un numéro d'identification (102) d'un utilisateur, où l'unité de reload (40) comprend des moyens pour le chargement ou le rechargement de l'unité de mémoire (101) avec un avoir à travers un réseau (50) en se basant sur le numéro d'identification (102) de l'utilisateur, **caractérisé**
**en ce que** l'unité centrale (30) comprend des dispositifs de mesure cellulaires (20) pour la saisie de paramètres de mesure (201) dans une pluralité de cellules topographiques (210/211/212), où lesdits dispositifs de mesure (20) sont reliés à l'unité centrale (30) de manière uni- ou bidirectionnelle, où au moyen de l'unité centrale (30), en se basant sur des paramètres de mesure transmis (201), des zones de valeur (14) peuvent être générées, si des valeurs de seuil prédéfinies des paramètres de mesure (201) dans une cellule topographique (210/211/212) sont dépassées, et chaque cellule (210/211/212) peut être clairement associée à une zone de valeur,
**en ce que** l'unité centrale (30) comprend une base de données (13) avec des paramètres de lieu géographique (112), des unités de valeur (113) et des numéros d'identification (102), où à chaque code de valeur (111) est associé le paramètre de lieu géographique (112), l'unité de valeur (113) et le numéro d'identification (102) correspondants et une zone de valeur (14) peut être associée au code de valeur (111) au moyen des paramètres de lieu géographique (112),
**en ce qu'**au moyen de l'unité centrale (30) la zone de valeur associée (14), les unités de valeur (113) et le numéro d'identification (102) peuvent être transmis à l'unité de reload (40) à travers un premier canal de communication (51) pour le chargement ou le rechargement du module de mémoire, et
**en ce que** l'unité de reload (40) peut créditer une valeur d'argent en fonction de la zone de valeur (14) et des unités de valeur (113) à l'unité de mémoire (101) à travers un deuxième canal de communication (52) au moyen du numéro d'identification (102), où le dispositif de commutation (30) est activé en se basant sur la valeur d'argent de l'unité de mémoire (101) rechargée.

17. Système pour le chargement et le rechargement d'unités de mémoire dédiées utilisées dans des dispositifs de commutation selon la revendication 16, **caractérisé en ce que** le dispositif de commutation (10), dans lequel la carte à puce à charger ou à recharger est introduite et/ ou intégrée, est l'appareil de communication.

18. Système pour le chargement et le rechargement d'unités de mémoire dédiées (101) utilisées dans des dispositifs de commutation (10) selon l'une quelconque des revendications 16 ou 17, **caractérisé en ce qu'**au moyen du dispositif de commutation (10) des signaux d'alarme et/ou de détresse peuvent être générés, en se basant sur l'activation et le numéro d'identification (102) et peuvent être transmis aux dispositifs correspondants.

19. Système pour le chargement et le rechargement d'unités de mémoire dédiées (101) utilisées dans des dispositifs de commutation (10) selon l'une quelconque des revendications 16 à 18, **caractérisé en ce que** les cellules (210/211/212) des dispositifs de mesure (20) sont disposées de manière à couvrir toute la surface par rapport à tous les paramètres de lieu géographique (112) des codes de valeur (111) possibles.

20. Système pour le chargement et le rechargement d'unités de mémoire dédiées (101) utilisées dans des dispositifs de commutation (10) selon l'une quelconque des revendications 16 à 19, **caractérisé en ce qu'**au moyen de l'unité centrale (30) les zones de valeur (14) sont associées uniquement aux cellules (210/211/212), dans lesquelles les valeurs de seuil sont dépassées.

21. Système pour le chargement et le rechargement d'unités de mémoire dédiées (101) utilisées dans des dispositifs de commutation (10) selon l'une quelconque des revendications 16 à 20, **caractérisé en ce que** les paramètres de lieu géographique (112) comprennent au moins des données de longitude et de latitude.

22. Système pour le chargement et le rechargement d'unités de mémoire dédiées (101) utilisées dans des dispositifs de commutation (10) selon l'une quelconque des revendications 16 à 21, **caractérisé en ce que** l'unité centrale (30) comprend un module de filtrage (301) pour filtrer les paramètres de mesure transmis (201) par rapport à des événements corrélés dans différentes cellules (210/211/212), où un module de filtrage correspondant (301) comprend au moins des paramètres de corrélation temporels et/ou topographiques.

23. Système pour le chargement et le rechargement d'unités de mémoire dédiées (101) utilisées dans des dispositifs de commutation (10) selon l'une quelconque des revendications 16 à 22, **caractérisé en ce que** l'unité de mémoire (101) est reliée de manière amovible au dispositif de commutation (10) à travers une interface de contact.

24. Système pour le chargement et le rechargement d'unités de mémoire dédiées (101) utilisées dans des dispositifs de commutation (10) selon l'une quelconque des revendications 16 à 23, **caractérisé en ce que** l'unité de mémoire (101) est intégrée en tant que composant fixe dans le dispositif de commutation (10).
